# EUROPÄISCHE PATENTANMELDUNG

(11) **EP 4 807 851 A1**
(43) Veröffentlichungstag der Anmeldung: **16.09.2026**
(21) Anmeldenummer: 25163422.6
(22) Anmeldetag: 13.03.2025
(51) Int. Cl.: H01M 10/12, H01M 50/534, H01M 50/541, H01M 50/562

(54) **VERFAHREN ZUR AUSBILDUNG EINES ELEKTRODENPLATTENPAKETS**

(71) Anmelder: HOPPECKE Batterien GmbH & Co. KG, 59929 Brilon (DE)
(72) Erfinder: KESPER, Heinrich, 34508 Willingen (DE)
(74) Vertreter: Brinkmann & Partner

(57) **Zusammenfassung**

Die Erfindung betrifft ein Verfahren zur Ausbildung eines Elektrodenplattenpakets für einen Bleiakkumulator, insbesondere einen sogenannten GroE-Akkumulator, aufweisend folgende Schritte:
- Bereitstellen von positiven und negativen Elektrodenplatten (6, 7) sowie von Separatoren (8),
- abwechselndes Anordnen von negativen und positiven Elektrodenplatten (6, 7) unter jeweiliger Zwischenordnung eines Separators (8),
- Bereitstellen eines endfertig ausgebildeten, ersten Anschlusspols (14) für die negativen Elektrodenplatten (7) und eines endfertig ausgebildeten, zweiten Anschlusspols (15) für die positiven Elektrodenplatten (6),
- Gießen einer ersten Polbrücke (12) für die negativen Elektrodenplatten (7) und einer zweiten Polbrücke (13) für die positiven Elektrodenplatten (6),
- wobei der erste Anschlusspol (14) während des Gießens der ersten Polbrücke (12) in die erste Polbrücke (12) eingebettet wird und wobei der zweite Anschlusspol (15) während des Gießens der zweiten Polbrücke (13) in die zweite Polbrücke (13) eingebettet wird und
- elektrisches Verbinden der negativen Elektrodenplatten (7) und der mit dem ersten Anschlusspol (14) ausgerüsteten ersten Polbrücke (12) einerseits sowie der positiven Elektrodenplatten (6) und der mit dem zweiten Anschlusspol (15) ausgerüsteten zweiten Polbrücke (13).

## Beschreibung

Die Erfindung betrifft ein Verfahren zur Ausbildung eines Elektrodenplattenpakets für einen Bleiakkumulator, insbesondere für einen sogenannten GroE-Akkumulator. Ferner betrifft die Erfindung einen Bleiakkumulator, insbesondere einen sogenannten GroE-Akkumulator, der über ein Gehäuse und ein davon aufgenommenes Elektrodenplattenpaket verfügt.

Bleiakkumulatoren im Allgemeinen sowie solche in der speziellen Ausgestaltung als sogenannte GroE-Akkumulatoren im Speziellen sind aus dem Stand der Technik an sich gut bekannt, weshalb es eines gesonderten druckschriftlichen Nachweises an dieser Stelle nicht bedarf.

Ein gattungsgemäßer Akkumulator verfügt über ein Gehäuse und über eine Mehrzahl von zu einem Elektrodenplattenpaket gehörenden Elektrodenplatten, die im Gehäuse untergebracht sind. Ferner nimmt das Gehäuse einen Elektrolyten auf, der im bestimmungsgemäßen Verwendungsfall die Elektrodenplatten des Elektrodenplattenpakets umspült. Im Falle eines Bleiakkumulators kommt als Elektrolyt insbesondere Schwefelsäure zur Anwendung.

Das Gehäuse des Akkumulators weist einen einseitig offen ausgebildeten Grundkörper auf. Dabei dient die offene Seite des Grundkörpers im Zuge der Herstellung dazu, eine Bestückung des Gehäuses mit den Elektrodenplatten vornehmen zu können. Im endmontierten Zustand ist die offene Seite des Grundkörpers durch einen Deckel verschlossen. Dieser schließt mit dem Grundkörper fluiddicht ab, insbesondere elektrolytdicht.

Es sind positive Elektrodenplatten einerseits und negative Elektrodenplatten andererseits vorgesehen. Dabei sind die positiven und die negativen Elektrodenplatten einander abwechselnd angeordnet, wobei zwischen zwei benachbarten Elektrodenplatten jeweils ein Separator zur Kurzschlussvermeidung angeordnet ist.

Sowohl die positiven Elektrodenplatten als auch die negativen Elektrodenplatten sind jeweils elektrisch miteinander verbunden, zu welchem Zweck eine jeweilige Polbrücke vorgesehen ist.

Es sind mithin eine erste Polbrücke und eine zweite Polbrücke gegeben, wobei die erste Polbrücke die negativen Elektrodenplatten und die zweite Polbrücke die positiven Elektrodenplatten miteinander verbindet. Eine jede Polbrücke trägt jeweils mindestens einen Anschlusspol. Es sind ein positiver Anschlusspol, der sogenannte Plus-Pol, und ein negativer Anschlusspol, der sogenannte Minus-Pol, vorgesehen. Dabei sind ein Anschlusspol und die zugehörige Polbrücke nach dem Stand der Technik durch Gießen einstückig ausgebildet.

Im endmontierten Zustand durchragen beide Anschlusspole jeweils eine jeweilige Durchtrittsöffnung im Deckel des Gehäuses. Es ist so eine elektrische Kontaktierung der Anschlusspole von außen ermöglicht.

Die Elektrodenplatten eines Bleiakkumulators weisen jeweils ein Gitter und eine aktive Masse auf, wobei die aktive Masse vom Gitter getragen bzw. gehalten ist. Die aktive Masse, d.h. das an der chemischen Reaktion beteiligte Material, ist im Falle der positiven Elektrodenplatte Bleidioxid (PbO₂) und im Falle der negativen Elektrodenplatte Blei (Pb). Bei dem Elektrolyten handelt es sich vorzugsweise um verdünnte Schwefelsäure (H₂SO₄).

Beim Entladen des Bleiakkumulators reagieren Blei, Bleidioxid und Schwefelsäure zu Bleisulfat (PbSO₄) und Wasser (H₂O). Beim Laden werden die Prozesse umgekehrt, d.h. Bleisulfat und Wasser wieder zu Blei, Bleidioxid und Schwefelsäure umgesetzt. Der Elektrolyt ist dabei im Unterschied zu anderen Akkumulator-Typen an der Reaktion beteiligt. In einer ungewünschten Nebenreaktion wird Wasser (H₂O) zu Sauerstoff (O₂) und Wasserstoff (H₂) zersetzt.

Zwischen den Elektrodenplatten sind Separatoren vorgesehen, die ein Berühren der unterschiedlich gepolten Platten und somit einen Kurzschluss verhindern. Gleichzeitig müssen die Separatoren lonenwanderungen der an der Reaktion beteiligen Ionen zulassen. Sie müssen also einerseits elektrisch isolierend und andererseits ionendurchlässig sein. Zudem sollten sie säure- und oxidationsbeständig sein. Geeignete Materialien sind im Falle von Bleiakkumulatoren zum Beispiel Polyethylen (PE), Polyvinylchlorid (PVC) oder Phenolharz.

Je nach Aufbau der positiven und negativen Elektrodenplatten werden unterschiedliche Bleiakkumulator-Bauarten unterschieden.

Bei der sogenannten Bauart GroE (Akronym für Großoberflächenplatten Engeinbau) gemäß DIN 40 738 besteht die positive Elektrodenplatte aus einer Reinblei-Platte mit einer lamellenförmigen Oberflächenstruktur. Die positive aktive Masse PbO₂ wird auf den Platten durch den sogenannten Formationsprozess gebildet. Die negativen Elektrodenplatten sind gegossene Gitter aus Blei oder einer Bleilegierung.

Vorteile eines GroE-Akkumulators sind der hohe Korrosionswiderstand und dadurch eine lange Lebensdauer. GroE-Akkumulatoren eigenen sich insbesondere für Hochstromentladungen von kurzer Dauer und somit für die Notstromversorgung von zum Beispiel Kraftwerken. GroE-Akkumulatoren sichern also im Störfall zum Beispiel die Leittechnik eines Kraftwerks ab und versorgen Kühlsysteme über Notstromkreis.

Obgleich sich vorbekannte Bleiakkumulatoren im alltäglichen Praxiseinsatz bewährt haben, besteht Verbesserungsbedarf. Der Erfindung liegt deshalb ausgehend vom Vorbeschriebenen die **Aufgabe** zugrunde, einen Bleiakkumulator, insbesondere einen GroE-Akkumulator, konstruktiv dahingehend weiterzuentwickeln, dass bei gleichzeitiger Betriebssicherheit eine lange Lebensdauer sichergestellt ist. Ferner soll ein Verfahren zur Ausbildung eines Elektrodenplattenpakets für einen solchen Bleiakkumulator vorgeschlagen werden, das eine vereinfachte und sichere Herstellung und somit auch eine sichere Verwendung eines Bleiakkumulators mit einem solch ausgebildeten Elektrodenplattenpaket gewährleistet.

Verfahrensseitig wird zur **Lösung** dieser Aufgabe vorgeschlagen ein Verfahren zur Ausbildung eines Elektrodenplattenpakets für einen Bleiakkumulator, insbesondere einen sogenannten GroE-Akkumulator, aufweisend folgende Schritte:
- Bereitstellen von positiven und negativen Elektrodenplatten sowie von Separatoren,
- abwechselndes Anordnen von negativen und positiven Elektrodenplatten unter jeweiliger Zwischenordnung eines Separators,
- Bereitstellen eines endfertig ausgebildeten, ersten Anschlusspols für die negativen Elektrodenplatten und eines endfertig ausgebildeten, zweiten Anschlusspols für die positiven Elektrodenplatten,
- Gießen einer ersten Polbrücke für die negativen Elektrodenplatten und einer zweiten Polbrücke für die positiven Elektrodenplatten,
- wobei der erste Anschlusspol während des Gießens der ersten Polbrücke in die erste Polbrücke eingebettet wird und wobei der zweite Anschlusspol während des Gießens der zweiten Polbrücke in die zweite Polbrücke eingebettet wird und
- elektrisches Verbinden der negativen Elektrodenplatten und der mit dem ersten Anschlusspol ausgerüsteten ersten Polbrücke einerseits sowie der positiven Elektrodenplatten und der mit dem zweiten Anschlusspol ausgerüsteten zweiten Polbrücke.

Vorrichtungsseitig wird zur **Lösung** der vorstehenden Aufgabe vorgeschlagen ein Bleiakkumulator, insbesondere ein sogenannter GroE-Akkumulator, mit einem Gehäuse und einer Mehrzahl von im Gehäuse angeordneten Elektrodenplatten, wobei positive und negative Elektrodenplatten vorgesehen sind, die sich unter jeweiliger Zwischenordnung eines Separators einander abwechseln, wobei das Gehäuse einen einseitig offen ausgebildeten Grundkörper und einen die offene Seite des Grundkörpers verschließenden Deckel aufwiest, wobei die positiven Elektrodenplatten einerseits und die negativen Elektrodenplatten andererseits jeweils mittels einer Polbrücke elektrisch miteinander verbunden sind, wobei jede Polbrücke jeweils einen Anschlusspol trägt, dadurch gekennzeichnet, dass die Anschlusspole in die jeweils zugehörigen Polbrücken stoffschlüssig eingebettet sind.

Erfindungsgemäß werden die Anschlusspole und die jeweils zugehörigen Polbrücken separat voreinander ausgebildet. Dabei werden zuerst die Anschlusspole endfertig vorbereitet. Alsdann werden die Polbrücken durch Gießen ausgebildet, wobei der zu einer Polbrücke gehörende Anschlusspol umgossen wird, so dass der Anschlusspol in die zugehörige Polbrücke schlussendlich stoffschlüssig eingebettet ist.

Die "endfertige" Ausbildung eines Anschlusspols im Sinne der Erfindung meint dabei, dass der Anschlusspol verwendungsfertig vorbereitet ist. Der vorbereitete Anschlusspol wird während des Gießens der jeweils zugehörigen Polbrücke in die Polbrücke eingebettet, so dass die im Weiteren entstehende Baukomponente aus Anschlusspol und Polbrücke hinsichtlich des Anschlusspols keiner weiteren Nachbearbeitung bedarf.

Erfindungsgemäß bedeutet "endfertig" in diesem Sinne insbesondere, dass der Anschlusspol als gegossenes Bauteil vorliegt, das über einen Fußabschnitt einerseits und einen Kopfabschnitt andererseits verfügt, wobei der Kopfabschnitt unter Zwischenordnung einer Labyrinthführung mit einer Kappe aus Kunststoff ausgerüstet ist und eine Kontaktierungseinlage aus Kupfer aufweist. Der so vorbereitete Anschlusspol wird alsdann mit seinem Fußabschnitt während des Gießens der zugehörigen Polbrücke in die Polbrücke eingebettet.

Die erfindungsgemäße Ausgestaltung bringt eine Reihe von Vorteilen wie folgt mit sich.

Die separate Ausgestaltung von Anschlusspol einerseits und Polbrücke andererseits ermöglicht es, in einfacher Weise unterschiedliche Gießmaterialien für den Anschlusspol und die Polbrücke einzusetzen. Insbesondere ist es möglich, den Anschlusspol aus einer Bleilegierung, insbesondere Hartblei, und die Polbrücke aus Reinblei herzustellen. Eine solche Ausgestaltung führt im bestimmungsgemäßen Verwendungsfall eines Bleiakkumulators in vorteilhafter Weise dazu, dass infolge von Oxidationserscheinungen am positiven Anschlusspol auftretende Abschieferungen mit dem positiven Effekt einer Kurzschlussvermeidung minimiert, wenn nicht sogar gänzlich unterbunden sind. Schlussendlich ergibt sich hierdurch ein sicherer Betrieb des Bleiakkumulators und damit verbunden eine erhöhte Lebensdauer.

Von Vorteil der Erfindung ist des Weiteren, dass die Anschlusspole unabhängig von der zugehörigen Polbrücke in einfacher Weise mittels einer spanabhebenden Drehbearbeitung außenumfangsseitig mit einer Labyrinthführung ausgerüstet werden können. Insbesondere bei einer Ausbildung von mehreren Anschlusspolen je Polbrücke erweist sich dieser Vorteil als weitreichend, da zugleich eine kostengünstige und präzise Anschlusspolausgestaltung ermöglicht ist. Dabei ist der Anschlusspol im endfertig montierten Zustand kontaktanschlussseitig mit einer Kunststoffkappe ausgerüstet, die in Kombination mit der Labyrinthführung trotz der Kriechneigung von Schwefelsäure einen weitestgehend fluiddichten Abschluss gegenüber der im Akkumulatorgehäusedeckel vorgesehenen Durchtrittsöffnung für den Anschlusspol erbringt. Es wird somit bei einer gleichzeitig einfachen und preisgünstigen Herstellung ein sicherer Betrieb des so hergestellten Bleiakkumulators erreicht.

Durch das Umgießen des Anschlusspols durch das die spätere Polbrücke bildenden Material wird zudem eine elektrisch innige Verbindung zwischen dem Anschlusspol und der Polbrücke ausgestaltet. Dies hilft, den von Polbrücke und Anschlusspol bereitgestellten Innenwiderstand zu reduzieren.

Gemäß einem weiteren Merkmal der Erfindung ist vorgesehen, dass die Elektrodenplatten zur elektrischen Verbindung mit der jeweiligen Polbrücke mit einer Kontaktfahne ausgerüstet werden. Diese Kontaktfahne wird bevorzugterweise einstückig mit dem jeweiligen Gitter der Elektrodenplatte ausgebildet, beispielsweise durch Gießen. Im weiteren Herstellverfahren dient diese Kontaktfahne dann dazu, eine elektrische Kontaktierung zwischen der Elektrodenplatten und der zugehörigen Polbrücke in einfacher Weise ausbilden zu können.

Gemäß einer ersten Alternative der Erfindung ist in diesem Zusammenhang vorgesehen, dass die Kontaktfahnen während des Gießens der jeweiligen Polbrücke in die Polbrücke eingebettet werden. Demgemäß wird die Polbrücke gegossen, wobei während des Gießens der Polbrücke sowohl der Anschlusspol als auch die Kontaktfahnen der zugehörigen Elektrodenplatten in die Polbrücke eingebettet werden. Zusätzlicher Verbindungsmaßnahmen bedarf es im Falle dieser Ausführungsalternative nicht. Denn durch das Gießen der Polbrücke erfolgt durch Einbetten sowohl der Kontaktfahnen als auch des Anschlusspols eine mechanische und elektrische Verbindung zwischen den Kontaktfahnen und dem Anschlusspol, und dies unter Zwischenordnung der Polbrücke.

Gemäß einer zweiten Alternative der Erfindung ist in diesem Zusammenhang vorgesehen, dass die Kontaktfähnchen mit der jeweiligen Polbrücke verlötet werden. Gemäß dieser alternativen Ausführungsform ist vorgesehen, dass zunächst in schon vorbeschriebener Weise die Polbrücke ausgebildet wird, wobei in die Polbrücke durch Gießen der zugehörige Anschlusspol eingebettet ist. Im Weiteren erfolgt dann eine elektrische Verbindung mit den der Polbrücke zugehörigen Elektrodenplatten. Zu diesem Zweck werden die Kontaktfahnen der Elektrodenplatten jeweils mit der Polbrücke verbunden, und zwar durch Löten, Anschweißen und/oder dergleichen stoffschlüssiges Verbinden. Dabei werden vorzugsweise der Reihe nach Elektrodenplatte für Elektrodenplatte mittels der zugehörigen Kontaktfahne mit der Polbrücke verbunden. Insbesondere bei Akkumulatoren mit vergleichsweise wenigen und/oder kleinen Elektrodenplatten ist diese Verfahrensalternative von wirtschaftlichem Vorteil.

Gemäß einem weiteren Merkmal der Erfindung ist vorgesehen, dass der in Wirkverbindung mit den positiven Elektrodenplatten stehende Anschlusspol aus einer Bleilegierung, vorzugsweise aus Hartblei, gegossen wird.

Durch diese Ausgestaltung wird in vorteilhafter Weise ein Pol bereitgestellt, der gegenüber Alterungserscheinungen wesentlich widerstandsfähiger ist, als vorbekannte Pole aus Reinblei.

Der in Wirkverbindung mit den positiven Elektrodenplatten stehende Anschlusspol wird nicht aus Reinblei, sondern aus einer Bleilegierung gebildet, um ein Abblättern oder Abschiefern infolge von Korrosion zu minimieren. Dabei erfolgt vorzugsweise eine Materialtrennung zwischen Reinblei und Bleilegierung im Übergang zwischen Polbrücke und Pol. Die Polbrücke wird vorzugsweise aus Reinblei gebildet, der Anschlusspol als solcher hingegen nicht, sondern stattdessen aus einer Bleilegierung.

Es hat sich herausgestellt, dass Hartblei über eine ausreichende Leitfähigkeit verfügt, so dass ein Unterschied hinsichtlich der Kenndaten des Akkumulators im Praxisbetrieb nicht gegeben ist, jedenfalls vernachlässigbar klein ist, sofern vorhanden. Es ist somit gestattet, einen Bleiakkumulator bereitzustellen, dessen Pole auch über einen vergleichsweise langen Zeitraum hinweg korrosionsbeständig sind. Der aus dem Stand der Technik bekannte Nachteil, dass nach einer bestimmten Betriebszeit eines Bleiakkumulators Kurzschlüsse zwischen positiven und negativen Elektrodenplatten aufgrund von abgeschiefertem Polmaterial quasi nicht verhindert werden können, ist somit hinausgezögert, wenn nicht sogar gänzlich überwunden.

Insbesondere mit Bezug auf GroE-Akkumulatoren ist hierdurch eine weitgehende Reduzierung der Kurzschlussneigung erreicht, was zu einer signifikanten Steigerung der Lebensdauer führt.

Gemäß einer bevorzugten Ausführungsform der Erfindung wird ferner eine Polbrücke bereitgestellt, die gegenüber Alterungserscheinungen wesentlich widerstandsfähiger ist, als die bisher eingesetzten Polbrücken. Polbrücken aus dem Stand der Technik werden unter andere aus einer Bleiantimonlegierung gefertigt. Es hat sich nun herausgestellt, dass die Verwendung von Reinblei für die Polbrücke einerseits und von Hartblei für die Anschlusspol andererseits einen nicht erwartbaren synergetischen Effekt hinsichtlich der Verbesserung von Korrosionserscheinungen insgesamt erbringt. Gemäß einem bevorzugten Merkmal der Erfindung ist wenigstens die Polbrücke, die die positiven Elektrodenplatten mit dem positiven Anschlusspol verbindet, daher aus Reinblei gebildet. Hierdurch wird eine hohe elektrische Leitfähigkeit im Verbindungsweg zwischen Elektrodenplatten und Pol sichergestellt. Es hat sich überdies herausgestellt, dass sich die negativen Korrosionseffekte mit Bezug auf Reinblei nahezu ausschließlich auf den Pol beschränken, die Polbrücke hiervon jedoch nicht betroffen ist.

Vorzugsweise ist der positive Anschlusspol aus Hartblei gebildet. Bei Hartblei handelt es sich um eine Blei-Antimon-Legierung mit vergleichsweise geringem Antimonanteil. Vorzugsweise besteht Hartblei aus folgenden Komponenten:
- 1 Gewichtsprozent bis 13 Gewichtsprozent Antimon;
- Restblei

Es hat sich herausgestellt, dass die geforderte mechanische Festigkeit und Korrosionsbeständigkeit erreicht wird, wenn das Hartblei aus folgenden Komponenten besteht;
- 4 Gewichtsprozent bis 5 Gewichtsprozent Antimon;
- Restblei

Der Ausdruck "Restblei" umfasst im Sinne der Erfindung nicht nur Blei als Hauptlegierungskomponente, sondern kann auch die Legierungskomponenten, wie AS, SE, SN und CU und Verunreinigungen umfassen, die im Falle von Verunreinigungen insbesondere aufgrund der jeweiligen Darstellungsmethode von Antimon und/oder Blei entweder technisch gesehen überhaupt nicht, oder nicht auf wirtschaftlich sinnvolle Weise aus der Legierung und/oder den Einzelkomponenten entfernt werden können.

Zu diesen Spuren, welche jeweils einzeln oder in beliebiger Weise kumuliert in der Hartblei-Legierung enthalten sein können, gehören
- max 0,04 Gewichtsprozent Bismuth,
- max 0,01 Gewichtsprozent Silber,
- max 0,001 Gewichtsprozent Kadmium,
- max 0,001 Gewichtsprozent Eisen,
- max 0,001 Gewichtsprozent Zink,
- max 0,001 Gewichtsprozent Tellur und/oder
- max 0,001 Gewichtsprozent Nickel.

Es ist dabei bevorzugt, dass der Gewichtsanteil der Spuren an weiteren Metallen zusammengenommen einen Betrag von 0,04 Gewichtsprozent nicht übersteigt.

Gemäß einem weiteren Merkmal der Erfindung ist vorgesehen, dass ein Anschlusspol mit einer Kappe aus Kunststoff ausgebildet wird. Im endmontierten Zustand durchragt der Anschlusspol die zugehörige Durchtrittsöffnung im Deckel des Akkumulatorgehäuses mithin unter Zwischenordnung der Kunststoffkappe. Es ist so ein besonders fluiddichter Abschluss gegeben.

Dabei ist gemäß einem weiteren Merkmal der Erfindung in diesem Zusammenhang vorgesehen, dass die Kappe durch Anspritzen ausgebildet wird. Es ist so eine besonders innige und damit auch dichte Verbindung zwischen der Kappe einerseits und dem Gussmaterial des Anschlusspols ausgebildet.

Da die als Elektrolyt dienende Schwefelsäure eine besonders hohe Kriechneigung aufweist, wird zur weiteren Verbesserung der fluiddichten Hindurchführung des Anschlusspols durch die zugehörige Durchtrittsöffnung im Deckel vorgeschlagen, dass der Anschlusspol außenumfangsseitig mit einer Rille ausgebildet ist. Diese Rille stellt eine Labyrinthführung dar, womit trotz der Kriechneigung von Schwefelsäure ein fluiddichter Abschluss weitestgehend sichergestellt ist. Es können zur verbesserten Ausgestaltung der Labyrinthführung eine Mehrzahl von Rillen vorgesehen sein, die in Höhenrichtung des Anschlusspols übereinander ausgebildet sind. Dabei ist diese Rillenausgestaltung in besonders betriebswirtschaftlicher Weise mittels einer spanabhebenden Drehbearbeitung möglich, weil der Anschlusspol und die Polbrücke nicht einstückig, sondern als separate Teile ausgebildet sind. Der insoweit mit einer Labyrinthführung außenumfangsseitig ausgerüsteten Anschlusspol wird im endfertig verwendeten Zustand in die Polbrücke eingebracht, und zwar durch Umgießen des Anschlusspols mit dem die spätere Polbrücke bildenden Gussmaterial.

Gemäß einem weiteren Merkmal der Erfindung ist vorgesehen, dass eine Polbrücke mit Querschnittsverjüngungen ausgebildet wird. "Querschnittsverjüngung" im Sinne der Erfindung meint dabei, dass in Polbrückenlängsrichtung hintereinander angeordnet Abschnitte vorgesehen sind, die einen verjüngten Polbrückenquerschnitt aufweisen, im Vergleich zu den Stellen der Polbrücken, in denen ein Anschlusspol angeordnet ist. Es ist mithin zwischen zwei in Polbrückenlängsrichtung aufeinanderfolgende Anschlusspole eine Querschnittsverjüngung vorgesehen. Diese Querschnittsverjüngung dient der Materialeinsparung, was insbesondere aus Gründen der preisgünstigeren Herstellung von Vorteil ist.

Gemäß einem weiteren Merkmal der Erfindung ist vorgesehen, dass ein Anschlusspol mit einer stirnseitig zugänglichen Einlage aus Kupfer oder einer Kupferlegierung ausgebildet wird.

Mit der vorbeschriebenen Querschnittsverjüngung geht in nachteiliger Weise ein erhöhter Innenwiderstand einher. Um diesen auszugleichen, ist je Anschlusspol eine Einlage aus Kupfer oder Kupferlegierung zur Polkontaktierung vorgesehen. Eine solche Einlage ist aus dem Stand der Technik an sich nicht unbekannt. Für einen Ausgleich des infolge der vorgesehenen Querschnittsverjüngung erhöhten Innenwiderstands der Polbrücke sind die Einlagen aber in Höhenrichtung des Anschlusspols länger als aus dem Stand der Technik vorbekannt ausgebildet. Vorzugsweise reichen die Kupfereinlagen bis in den Fußabschnitt des Anschlusspols hinein, d.h. in Richtung der Polbrücke weiter in den Anschlusspol hinein, als die Höhenerstreckung der vom Anschlusspol getragenen Kunststoffkappe. Im Vergleich zum Stand der Technik werden hierdurch für die Einlage zwar höhere Kosten in Kauf genommen, doch die Reinbleiersparnis infolge der Querschnittsverjüngung überwiegt gleichwohl, so dass sich im Ergebnis ein betriebswirtschaftlicher Vorteil einstellt.

Gemäß einem weiteren Merkmal der Erfindung ist vorgesehen, dass ein Ausbilden des Elektrodenplattenpakets in einem Akkumulatorgehäuse durchgeführt wird.

Die erfindungsgemäße Ausgestaltung ermöglicht es, ein Plattenpaket im späteren Gehäuse des Akkumulators auszubilden. Ein Umsetzen eines außerhalb eines Akkumulatorgehäuses ausgebildeten Elektrodenplattenpakets in das Akkumulatorgehäuse kann damit unterbleiben. Dies ist insbesondere bei vergleichsweise groß ausgebildeten Elektrodenplatten und/oder einer größeren Anzahl von Elektrodenplatten je Paket von Vorteil, weil ein nachträgliches Umsetzen eines außerhalb eines Gehäuses ausgebildeten Elektrodenplattenpakets in das Akkumulatorgehäuse die Gefahr mit sich bringt, dass es aufgrund des Gewichts des Elektrodenplattenpakets zu einer Beschädigung desselben oder einzelnen Baubestandteile kommt. Insbesondere können ob des Gewichts des Elektrodenplattenpakets relative Bewegungen einzelner Komponenten zueinander nicht sicher ausgeschlossen werden, was zu ungewollten Rissbildungen, Deformationen und/oder dgl. Beschädigungen am Elektrodenplattenpaket führen kann. Die erfindungsgemäße Ausgestaltung schafft hier insofern Abhilfe, als dass eine endfertige Ausbildung eines Elektrodenplattenpakets im späteren Akkumulatorgehäuse ermöglicht ist, so dass ein Einsetzen eines zuvor endfertig ausgebildeten Elektrodenplattenpakets in ein Akkumulatorgehäuse nicht erforderlich ist.

Vorrichtungsseitig wird gemäß einem weiteren Merkmal der Erfindung vorgeschlagen, dass die Anschlusspole durch eine jeweilige Durchtrittsöffnung im Deckel hindurchragen, wobei zumindest der Anschlusspol der positiven Elektrodenplatten in Relation zum Deckel längsverschieblich von der zugehörigen Durchtrittsöffnung aufgenommen ist.

Es ist auf diese Weise eine Poldurchführung gegeben, die es dem Anschlusspol erlaubt, in Relation zum Deckel in Höhenrichtung verschoben werden zu können. Der Deckel ist also nicht kraftübertragend mit dem Anschlusspol gekoppelt, so dass infolge eines Elektrodenplattenwachstums auftretende Polbewegungen in Relation zum Deckel nicht behindert sind, also ausgeführt werden können. Kraftbeaufschlagungen des Deckels infolge eines Elektrodenplattenwachstums sind folglich vermieden.

Der Anschlusspol nach der Erfindung ist von der zugehörigen Durchtrittsöffnung im Deckel längsverschieblich aufgenommen. Dies ermöglicht eine relative Verschieblichkeit des Anschlusspols gegenüber dem Deckel. Sofern also bei hinreichendem Wachstum der positiven Elektrodenplatten der damit elektrisch verbundene Anschlusspol in Höhenrichtung nach oben wandert, findet hierdurch keine Kraftbeaufschlagung des Deckels statt, da sich der Anschlusspol in Höhenrichtung frei in Relation zum Deckel bewegen kann.

Durch diese Maßnahme ist die Lebensdauer eines gattungsgemäßen Akkumulators, insbesondere eines GroE-Akkumulators, deutlich verlängert. Betriebszeiträume von 20 Jahren, vorzugsweise von 25 Jahren, noch mehr bevorzugt von 30 Jahren und länger sind ermöglicht, was insbesondere den Einsatz von GroE-Akkumulatoren für eine Notstromversorgung auch in sensiblen Bereichen, beispielsweise im Bereich der Notstromversorgung von Atomkraftwerken, mit gesteigerter Sicherheit ermöglicht. Mit dieser Ausgestaltung wird mithin bei gleichzeitig gestiegener Betriebssicherheit eine verlängerte Lebensdauer erreicht.

Gemäß einem weiteren Merkmal der Erfindung ist vorgesehen, dass der Anschlusspol gegenüber dem Deckel fluidabgedichtet ist. Ein ungewolltes Ausströmen oder Austreten von Elektrolyt über den Kontaktbereich zwischen Anschlusspol und Deckel ist damit vermieden, was einen sicheren Betrieb des Bleiakkumulators gewährleistet. Es sind mithin infolge der konstruktiven Ausgestaltung einerseits die Fluiddichtigkeit als auch andererseits die relative Verschieblichkeit des Anschlusspols gegenüber dem Deckel gewährleistet.

Gemäß einem weiteren Merkmal der Erfindung ist vorgesehen, dass der Anschlusspol die Durchtrittsöffnung unter Zwischenordnung eines den Anschlusspol umgebenden Ringkörpers durchragt.

Gemäß dieser besonders bevorzugten Ausführungsform ist für einen fluiddichten Abschluss zwischen Anschlusspol und Deckel ein Ringkörper vorgesehen. Dieser Ringkörper umgreift den Anschlusspol und ist in die vom Deckel bereitgestellte Durchtrittsöffnung eingesetzt. Der Anschlusspol durchragt die Durchtrittsöffnung mithin unter Zwischenordnung des den Anschlusspol umgebenden Ringkörpers. Dabei stellt der Ringkörper einerseits die Abdichtung des Anschlusspols gegenüber dem Deckel sicher und sorgt andererseits in der Funktion als Führungskörper dafür, dass die relative Verschieblichkeit zwischen Anschlusspol und Deckel gewährleistet ist.

Gemäß einem weiteren Merkmal der Erfindung ist vorgesehen, dass der Ringkörper am Deckel formschlüssig angeordnet ist. Dieser Formschluss stellt eine positionssichere Anordnung des Ringkörpers am Deckel sicher. Zudem ist eine einfache Montage ermöglicht. Ferner ist insbesondere im Reparaturfall eine Demontage gestattet, indem der Formschluss zwischen Ringkörper und Deckel aufgelöst wird.

Durch die formschlüssige Anordnung des Ringkörpers am Deckel ist eine quasi einstückige Ausgestaltung gegeben. Der Ringkörper ist mithin gegenüber dem Deckel positionsgesichert, wobei er den zugehörigen Anschlusspol längsverschieblich umgibt. Der Anschlusspol kann sich mithin in Relation zum Ringkörper und damit auch in Relation zum Deckel in Höhenrichtung verschieben. Diese mögliche Linearbewegung des Anschlusspols gestattet in schon vorbeschriebener Weise ein Wachstum der positiven Elektrodenplatte, ohne dass die Gefahr einer Elektrolytundichtigkeit gegeben ist.

Gemäß einem weiteren Merkmal der Erfindung ist vorgeschlagen, dass der Ringkörper im endmontierten Zustand mit einem umlaufenden Ringteil auf dem Deckel oberseitig aufliegt und mit einer Rastlasche den Deckel unterseitig hintergreift. Durch diese konstruktive Ausgestaltung ist im endmontierten Zustand der schon vorbeschriebene Formschluss zwischen Ringkörper einerseits und Deckel andererseits gegeben. Dabei erlaubt die Ausgestaltung der Rastlaschen eine denkbar einfache Montage, indem der Ringkörper in die zugehörige Durchtrittsöffnung des Deckels soweit eingeführt wird, bis die Rastlaschen radial ausfedern und mit dafür vorgesehenen Rasthaken den Deckel innenseitig hintergreifen. Im endmontierten Zustand ist der Ringkörper mithin dadurch am Deckel verrastet, dass er einerseits mit dem Ringteil und andererseits mit den Rastlaschen am Deckel klemmend anliegt.

Gemäß einem weiteren Merkmal der Erfindung ist vorgesehen, dass der Ringkörper durchtrittsöffnungsseitig eine erste Dichtung trägt. Mittels dieser ersten Dichtung ist der Ringkörper gegenüber der Durchtrittsöffnung, das heißt gegenüber dem Deckel abgedichtet.

Gemäß einem weiteren Merkmal der Erfindung ist vorgesehen, dass der Ringkörper anschlusspolseitig eine zweite Dichtung trägt. Mittels dieser Dichtung findet mithin eine Abdichtung zwischen den Ringkörper einerseits und dem Anschlusspol andererseits statt.

In der Kombination der beiden Dichtungen ist eine vollständige Abdichtung des Anschlusspols gegenüber dem Deckel, das heißt der Durchtrittsöffnung gegeben, durch die der Anschlusspol hindurchgeführt ist.

Da der Anschlusspol unter Zwischenordnung eines Ringkörpers in der Durchtrittsöffnung angeordnet ist, sind zwei Dichtungen vorgesehen, und zwar eine erste Dichtung zwischen dem Deckel und den Ringkörper und eine zweite Dichtung zwischen dem Ringkörper und dem Anschlusspol. Im Ergebnis dieses Dichtsystems ist eine vollständige Elektrolytabdichtung gegeben. Da gleichzeitig eine Längsverschieblichkeit des Anschlusspols in Relation zum Ringkörper gegeben ist, wirkt das Dichtungssystem bestimmungsgemäß auch dann, wenn sich der Anschlusspol in Höhenrichtung aufgrund eines Wachstums der Elektrodenplatte verschiebt.

Gemäß einem weiteren Merkmal der Erfindung ist vorgesehen, dass der Ringkörper und eine Dichtung aus Kunststoff gebildet sind. Dabei ist das die Dichtung bildende Kunststoffmaterial vorzugsweise an den Ringkörper angespritzt.

Noch mehr bevorzugt ist es, dass beide Dichtungen an den Ringkörper angespritzt sind und aus dem gleichen Material gebildet sind. Es ist so ein Zwei-Komponenten-Kunstostoff-Bauteil gegeben, das aus dem Ringkörper einerseits und den angespritzten Dichtungen andererseits gebildet ist. Eine solche Zwei-Komponenten-Ausgestaltung hat den Vorteil einer vereinfachten Montage beziehungsweise Demontage. Zudem ist eine Fertigung in einfacher Weise möglich, und dies mit minimalsten Toleranzen.

Gemäß einem weiteren Merkmal der Erfindung ist vorgesehen, dass der Anschlusspol eine Kappe aus Kunststoff trägt. Diese Kappe ist vorzugsweise an den Anschlusspol angespritzt.

Die Kunststoffkappe des Anschlusspols verbessert die Dichtwirkung des vorbeschriebenen Dichtsystems. So liegt die zweite Dichtung, das heißt die Dichtung zwischen Ringkörper und Anschlusspol nicht direkt am Anschlusspol an, sondern unter Zwischenordnung der vom Anschlusspol getragenen Kappe. Es findet mithin eine Abdichtung zwischen der zweiten Dichtung einerseits und der vom Anschlusspol getragenen Kappe andererseits statt. Dabei stehen die beiden Kunststoffmaterialien von Dichtung und Kappe in direktem Wirkkontakt, was eine bessere Abdichtung ermöglicht. Insbesondere sind Undichtigkeiten aufgrund einer am Außenpol entlangkriechenden Schwefelsäure vermieden.

Wie sich gezeigt hat, kann trotz des vorbeschriebenen Dichtsystems aus erster Dichtung und zweiter Dichtung eine hundertprozentige Abdichtung insbesondere zwischen Anschlusspol und Ringkörper nicht erreicht werden. Dies ergibt sich dadurch, dass der Elektrolyt schwefelsäurebasiert ist und Schwefelsäure eine sehr hohe Kriechneigung aufweist. Mit der Zeit kriecht deshalb die Schwefelsäure zwischen Dichtung und Anschlusspol hindurch und tritt an der Deckeloberseite aus. Dies führt zu Verfärbungen, insbesondere des Anschlusspols, die korrosionsbedingt sind. Dies gilt es bevorzugterweise zu vermeiden, was mit der vom Anschlusspol vorzugsweise getragenen Kappe aus Kunststoff erreicht ist. Dabei ist die Kunststoffkappe vorzugsweise als Kunststoffbeschichtung durch An- beziehungsweise Umspritzen des Anschlusspols ausgebildet. Dabei hat diese Kunststoffkappe in Höhenrichtung eine solche Erstreckung, dass im Kontaktbereich zwischen Anschlusspol und zweiter Dichtung des Ringkörpers die Kunststoffummantelung für eine zusätzliche Abdichtung sorgt.

Gemäß einem weiteren Merkmal der Erfindung ist vorgesehen, dass der Anschlusspol eine stirnseitig zugängliche Einlage aus einem elektrisch leitenden Material aufweist. Diese

Einlage dient der elektrischen Kontaktierung des Anschlusspols mit einem Anschlusskontakt, beispielsweise einem von einem elektrischen Kabel bereitgestellten Anschlusskontakt. Dabei stellt die Einlage zur positionssicheren Anordnung eines Anschlusskontakts im Anschlusspol eine Gewindebohrung bereit. In diese greift in endmontierten Zustand eine entsprechende Schraube ein, mit welcher der Anschlusspol mit dem Anschlusskontakt lösbar gekoppelt ist.

Gemäß einem weiteren Merkmal der Erfindung ist vorgesehen, dass die Einlage aus Kupfer oder aus einer Kupferlegierung gebildet ist. Hierdurch ist eine erhöhte elektrische Leitfähigkeit gegeben und gleichzeitig der Innenwiderstand der Polausgestaltung minimiert.

Gemäß einem weiteren Merkmal der Erfindung ist vorgesehen, dass die Kappe eine Öffnung aufweist. Durch diese Öffnung hindurch ist die Gewindebohrung der Einlage von außen zugänglich. Es ist so trotz Kappe eine uneingeschränkte und bestimmungsgemäße Zugänglichkeit der von der Einlage bereitgestellten Gewindebohrung sichergestellt.

Um für eine noch bessere Elektrolytabdichtung zu sorgen, ist der Anschlusspol außenseitig mit einer Rille ausgerüstet. Es können in Höhenrichtung des Anschlusspols mehrerer solcher Rillen vorgesehen sein, die in Höhenrichtung beabstandet zueinander angeordnet sind. Mittels derartiger Rillen wird umfangsseitig des Anschlusspols eine Labyrinthführung ausgebildet. Diese Labyrinthführung erfüllt zwei Funktionen. Zum einen verlängert sich für die Schwefelsäure der Kriechweg zwischen Anschlusspol und Kappe und zum anderen wird eine bessere Verbindung zwischen dem Anschlusspol beziehungsweise dem Material des Anschlusspols einerseits und der die Kappe bildenden Kunststoffummantelung andererseits erzielt.

Im bestimmungsgemäßen Verwendungsfall ist der Anschlusspol stirnseitig mit einem Anschlusselement, beispielsweise einem Anschlusskontakt ausgerüstet, das mit der vom Anschlusspol bereitgestellten Kupfereinlage verschraubt ist. In diesem bestimmungsgemäßen Verwendungsfall ist ein direkter Zugriff auf den Anschlusspol beispielsweise zur Durchführung einer elektrischen Messung nicht mehr möglich, da der Anschlusspol vollständig von einer Kunststoffummantelung umgeben ist. Es kann deshalb gemäß einer besonders bevorzugten Ausführungsform vorgesehen sein, dass die Kunststoffummantelung des Anschlusspols eine Lücke in Ausgestaltung einer Öffnung aufweist, durch die hindurch im Bedarfsfall ein Messinstrument mit dem Anschlusspol kontaktiert werden kann.

Gemäß einem weiteren Merkmal der Erfindung ist vorgesehen, dass der Anschlusspol außenseitig mit einer Beschichtung ausgerüstet ist. Bei einer solchen Beschichtung kann es sich insbesondere um einen Haftvermittler handeln, der für eine bessere Verbindung und damit auch Abdichtung zwischen Anschlusspol einerseits und Kunststoffummantelung andererseits dient.

Gemäß einem weiteren Merkmal der Erfindung ist vorgesehen, dass der Außenpol einen Fußabschnitt aufweist, der in radialer Richtung mit der Kappe absatzfrei abschließt.

Die Ausbildung der die Labyrinthführung bereitstellenden Rillen erfolgt vorzugsweise durch eine spanabhebende Bearbeitung, beispielsweise mittels Drehen. Dabei wird der Kopfabschnitt des Anschlusspols so weit abgedreht, dass nach endfertig ausgebildeter Kappe ein absatzfreier Übergang zum nicht spanend bearbeiteten Fußabschnitt des Anschlusspols ausgebildet ist. Es ist so in vorteilhafter Weise ein Absatz vermieden, der im Falle einer Anschlusspolverschiebung in Höhenrichtung nach oben unterseitig des Deckels an diesen anschlagen könnte. Die erfindungsgemäß vorgesehene Verschiebemöglichkeit des Anschlusspols ist mithin durch die Ausgestaltung der die Kappe bildenden Kunststoffummantelung des Anschlusspols nicht behindert.

Mit der vorbeschriebenen Ausgestaltung wird zusammenfassend eine Poldurchführung bereitgestellt, die über einen im Vergleich zum Deckel längsverschieblich ausgebildeten Anschlusspol verfügt. Dies ermöglicht insbesondere ein Wachstum der positiven Elektrodenplatte ohne die Gefahr einer Elektrolytundichtigkeit zwischen Anschlusspol und Deckel. Es ist dabei bevorzugterweise ein Dichtsystem vorgesehen, das über zwei Dichtungen verfügt, nämlich eine anschlusspolseitige Dichtung einerseits und eine deckelseitige Dichtung andererseits, welche beiden Dichtungen von einem Ringkörper bereitgestellt sind, der den Anschlusspol umgreift. Für eine zusätzliche Verbesserung der Dichtwirkung kann der Anschlusspol kopfseitig mit einer Kunststoffbeschichtung ausgerüstet sein, die mit der vom Ringkörper getragenen Dichtung zusammenwirkt. Ferner ist es bevorzugt, eine Labyrinthführung zwischen Anschlusspol und Beschichtung auszubilden, was den Kriechweg für Schwefelsäure verlängert und zudem eine innigere Verbindung zwischen Anschlusspol und Kunststoffummantelung schafft.

Weitere Merkmale und Vorteile der Erfindung ergeben sich aus der nachfolgenden Beschreibung anhand der Figuren. Dabei zeigen
- Fig. 1: in schematischer Explosionsdarstellung einen erfindungsgemäßen Akkumulator;
- Fig. 2: in einer schematischen Perspektivdarstellung eine erfindungsgemäße Polleiste;
- Fig. 3: in einer zweiten schematischen Perspektivdarstellung eine erfindungsgemäße Polleiste;
- Fig. 4: in einer schematischen Seitenansicht die Polleiste nach Fig. 3;
- Fig. 5: in einer schematischen Draufsicht von oben die Polleiste nach Fig. 3;
- Fig. 6: in einer schematischen Seitenansicht die Polleiste nach Fig. 4;
- Fig. 7: in einer schematischen Detailansicht eine Poldurchführung;
- Fig. 8: in schematischer Perspektivansicht einen Ringkörper;
- Fig. 9: in einer schematischen Seitendarstellung den Ringkörper nach Fig. 8;
- Fig. 10: in einer schematischen Schnittdarstellung den Ringkörper nach Fig. 9 gemäß Schnittlinie A-A;
- Fig. 11: in einer schematischen Schnittdarstellung ausschnittsweise den Ringkörper nach Fig. 5, und zwar gemäß Ausschnitt Z;
- Fig. 12: in einer schematischen Schnittdarstellung eine Poldurchführung;
- Fig. 13: in einer Schnittdarstellung einen Anschlusspol nach der Erfindung gemäß eines ersten Herstellungsschritts;
- Fig. 14: in schematischer Darstellung den Anschlusspol nach Fig. 13 in einem zweitem Herstellungsschritt und
- Fig. 15: in schematischer Darstellung den Anschlusspol nach den Figuren 13 und 14 in einem dritten und letzten Herstellungsschritt.

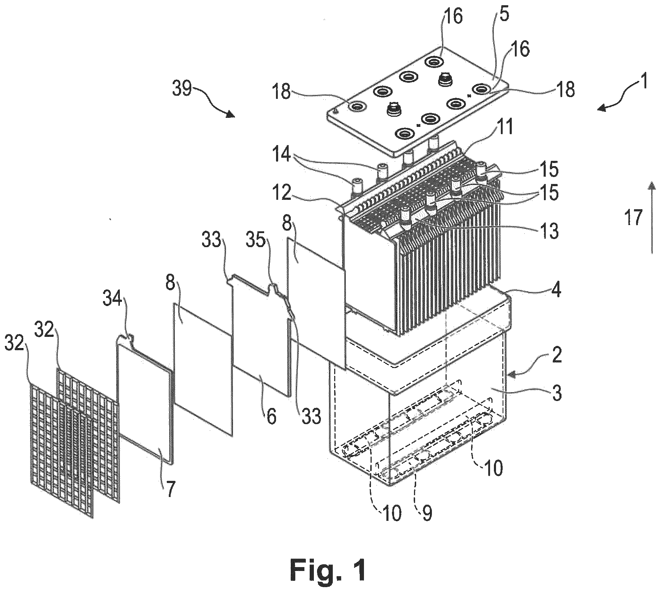

Fig. 1 lässt in einer schematischen Explosionsdarstellung einen erfindungsgemäßen Akkumulator 1 in der Ausgestaltung eines GroE-Akkumulators erkennen.

Der Akkumulator 1 verfügt über ein Gehäuse 2 sowie über ein im endmontierten Zustand im Gehäuse 2 untergebrachtes Elektrodenplattenpakets 39, das seinerseits eine Mehrzahl von Elektrodenplatten 6 und 7 aufweist. Es sind dabei positive Elektrodenplatten 6 und negative Elektrodenplatten 7 vorgesehen, die sich unter jeweiliger Zwischenordnung eines Separators 8 einander abwechseln.

Das Gehäuse 2 ist zweiteilig ausgebildet und verfügt über einen einendseitig offen ausgebildeten Grundkörper 3 und einen die offene Seite 4 des Grundkörpers 3 verschließenden Deckel 5. Im endmontierten Zustand sind der Grundkörper 3 und der Deckel 5 fluiddicht miteinander verbunden.

Die positiven Elektrodenplatten 6 einerseits und die negativen Elektrodenplatten 7 andererseits sind jeweils mittels einer Polbrücke 12 bzw. 13 elektrisch miteinander verbunden. Dabei trägt jede Polbrücke 12 bzw. 13 mehrere Anschlusspole 14 bzw. 15. Im dargestellten Ausführungsbeispiel nach Fig. 1 sind die positiven Elektrodenplatten 6 mittels der Polbrücke 13 elektrisch miteinander kontaktiert. Die Polbrücke 12 verbindet indes die negativen Elektrodenplatten 7 miteinander. Jede Polbrücke 12 bzw. 13 trägt jeweils vier Anschlusspole 14 bzw. 15.

Wie sich aus der Darstellung nach Fig. 1 ferner ergibt, trägt die Polbrücke 13 der positiven Elektrodenplatten 6 die Anschlusspole 15. Die Polbrücke 12 der negativen Elektrodenplatten 7 trägt indes die Anschlusspole 14.

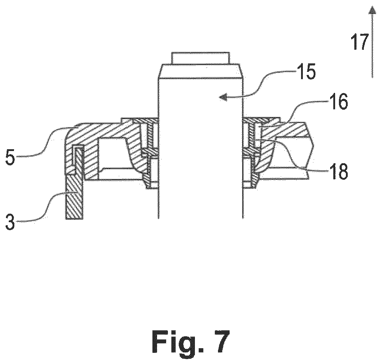

Zwecks einer Kontaktierung der Anschlusspole 14 und 15 von außen sind im Deckel 5 entsprechende Durchtrittsöffnungen 16 ausgebildet, durch die hindurch die Anschlusspole 14 und 15 im endmontierten Zustand ragen. Fig. 7 lässt diesen Zusammenhang am Beispiel eines Anschlusspols 15 erkennen.

Wie Fig. 1 ferner zeigt, stellt der Grundkörper 3 des Gehäuses 2 einen Gehäuseboden 9 bereit. Dieser verfügt innenseitig über Stege 10. Auf diesen Stegen 10 stützen sich die negativen Elektrodenplatten 7 ab. Die positiven Elektrodenplatten 6 sind in Höhenrichtung 17 kürzer als die negativen Elektrodenplatten 7 ausgebildet. Sie sind frei hängend vom Grundkörper 3 des Gehäuses 2 aufgenommen, stützen sich also nicht gegenüber den Stegen 10 ab. Es ist vielmehr ein Freiraum belassen, und zwar zwischen der jeweiligen Unterkante der positiven Elektrodenplatten 6 einerseits und den Stegen 10 andererseits.

Für eine hängende Anordnung der positiven Elektrodenplatten 6 im Gehäuse 2 verfügen die positiven Elektrodenplatten 6 jeweils über Arme 33. Im endmontierten Zustand stützen sich die positiven Elektrodenplatten 6 mittels ihrer Arme 33 an zugehörigen Kontaktflächen des Gehäuses 2 ab. Diese Kontaktflächen werden von Balkonen bereitgestellt, die sich durch einen Absatz in den zugehörigen Seitenwänden des Grundkörpers 3 ergeben.

Im bestimmungsgemäßen Verwendungsfall des Akkumulators 1 kommt es infolge von Oxidationserscheinungen zu einem Wachstum der positiven Elektrodenplatten 6 in Höhenrichtung 17. Dabei wachsen die positiven Elektrodenplatten 6 in Höhenrichtung 17 nach unten, d.h. in Richtung der Stege 10.

Der zwischen den positiven Elektrodenplatten 6 und den Stegen 10 belassene Freiraum dient mithin dazu, eine Vergrößerung der Elektrodenplatten 6 infolge eines Wachstums aufnehmen zu können.

Im endmontierten Zustand ist das Elektrodenplattenpaket 39 positionssicher innerhalb des Grundkörpers 3 des Gehäuses 2 positioniert. Zur Lagesicherung in Längsrichtung des Gehäuses 2 dienen Abstandshalter 32, die in Fig. 1 beispielhaft als gitterförmige Kunststoffplatten dargestellt sind.

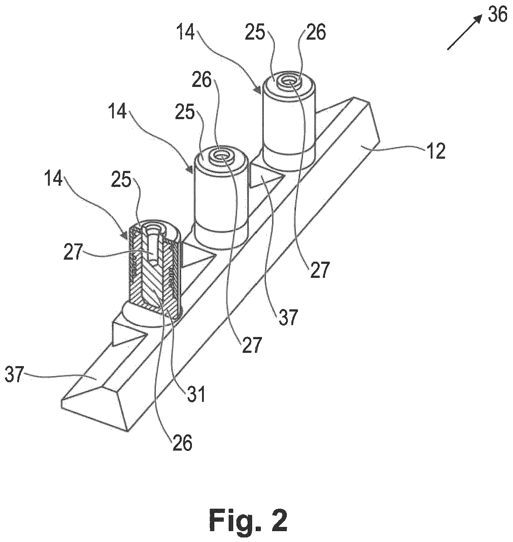

Wie sich insbesondere aus der Ausschnittsdarstellung nach Fig. 2 ergibt, ist die hier beispielhaft dargestellte Polbrücke 12 mit einer Mehrzahl von Anschlusspolen 14 ausgerüstet, die in Längsrichtung 36 hintereinander angeordnet sind. Dabei ist erfindungsgemäß vorgesehen, dass die Anschlusspole 14 in die Polbrücke 12 stoffschlüssig eingebettet sind. Dies wird dadurch erreicht, dass zunächst die Anschlusspole 14 endfertig, d.h. verwendungsfertig ausgebildet werden. Alsdann wird die Polbrücke 12 durch Gießen ausgebildet, wobei die Anschlusspole 14 während des Gießens des Polbrücke 12 in die Polbrücke 12 eingebettet werden. Es entsteht so eine innige Verbindung, und zwar eine sowohl mechanische als auch elektrische Verbindung zwischen der Polbrücke 12 und den Anschlusspolen 14.

Insbesondere hinsichtlich der positiven Anschlusspole 15 wird in diesem Zusammenhang vorgeschlagen, diese aus einer Bleilegierung, vorzugsweise Hartblei, zu bilden, wohingegen die zugehörige Polbrücke 13 aus Reinblei gebildet ist.

Wie sich aus der Darstellung nach Fig. 2 ferner ergibt, verfügt die Polbrücke 12 über Verjüngungen 37. Diese Verjüngungen führen in vorteilhafter Weise zu einer Materialersparnis, denn es wird im Unterschied zu einer Ausgestaltung ohne Verjüngungen 37 weniger Gussmaterial benötigt.

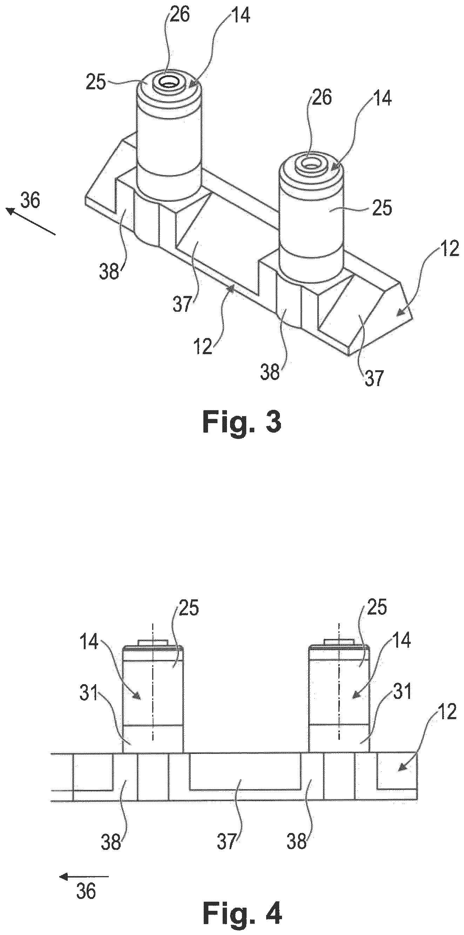

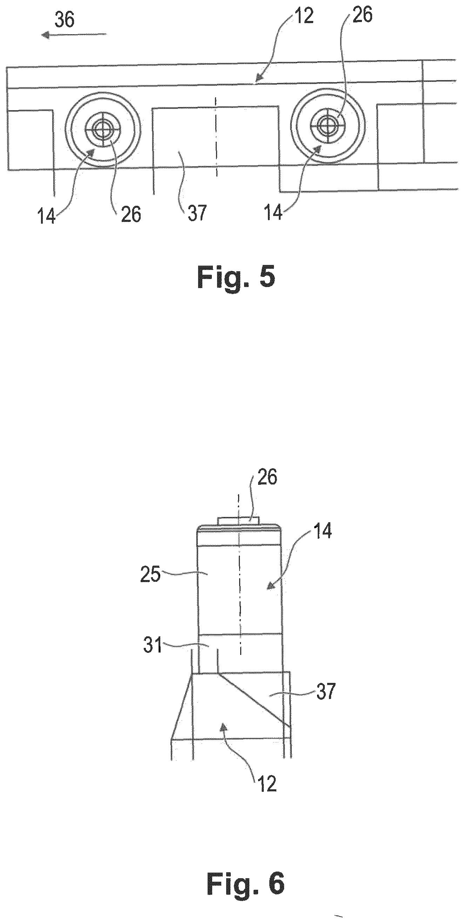

Die Figuren 3 bis 6 lassen eine erfindungsgemäße Polbrücke in einer zweiten Ausführungsform erkennen, wobei die gezeigte Ausführungsform anstelle von vier Anschlusspolen 14 nur über zwei Anschlusspole 14 verfügt.

Wie sich aus einer Zusammenschau der Figuren 3 bis 6 ergibt, verfügt ein jeder Anschlusspol 14 anschlusspolseitig über eine Kappe 25. Diese Kappe 25 besteht aus Kunststoff und ermöglicht, wie die im Weiteren noch näher beschrieben werden wird, eine verbesserte Abdichtung des Anschlusspols 14 gegenüber der zugehörigen Durchtrittsöffnung 16 im Deckel 5.

Für eine elektrische Kontaktierung ist der Anschlusspol 14 mit einer Einlage 26 vorzugsweise aus Kupfer ausgerüstet. Diese Einlage 26 reicht, wie insbesondere die Darstellung nach Fig. 1 erkennen lässt, bis in den Fußabschnitt 31 eines jeden Anschlusspols 14, d.h. die Einlage 26 erstreckt sich in Richtung auf die Polbrücke 12 über die Längserstreckung der Kappe 25 hinaus. Durch diese Ausgestaltung der Einlage wird die durch die Verjüngungen 37 der Polbrücke 12 bedingte Erhöhung des Innenwiderstands der Polbrücke 12 kompensiert.

Zwecks elektrischer Kontaktierung der Elektrodenplatten 6 bzw. 7 mit den zugehörigen Polbrücken 12 bzw. 13 verfügen die Elektrodenplatten 6 bzw. 7 über entsprechende Fahnen 34 b zw. 35. Dabei wird von den negativen Elektrodenplatten 7 die Fahne 34 bereitgestellt und die positiven Elektrodenplatten 6 tragen die Fahne 35, wie sich dies insbesondere aus der Darstellung nach Fig. 1 ergibt.

Zur elektrischen Kontaktierung der Fahnen 34 bzw. 35 mit den zugehörigen Polbrücken 12 bzw. 13 kann insbesondere vorgesehen sein, dass bei einem Gießen der jeweiligen Polbrücke 12 bzw. 13 nicht nur die zugehörigen Anschlusspole 14 bzw. 15, sondern auch die zugehörigen Fahnen 34 bzw. 35 mit eingebettet werden. Es wird so eine stoffschlüssige Verbindung zwischen den Fahnen 34 und 35 und den zugehörigen Anschlusspolen 14 und 15 unter jeweiliger Zwischenordnung der zugehörigen Polbrücke 12 bzw. 13 ausgebildet.

Die in Wirkverbindung mit den positiven Elektrodenplatten 6 stehenden Anschlusspole 15 sind aus einer Bleilegierung gegossen, um so ein Abschiefern infolge von Oxidationserscheinungen zu minimieren. Dies dient der Kurzschlussvorbeugung. Sollte es gleichwohl zu abgeplatzten Polpartikeln aufgrund von Abschiefereffekten kommen, dient ein oberseits des Elektrodenplattenpakets 39 vorgesehene Schutzgitter 11 dazu, Partikel zurückzuhalten, die eine solche Größe aufweisen, dass eine gleichzeitige Kontaktierung einer positiven Elektrodenplatte 6 und einer negativen Elektrodenplatte 7 ermöglicht ist. Das Schutzgitter 11 dient mithin ebenfalls der Vorbeugung von ungewollten Kurzschlüssen.

Wie schon vorstehend beschrieben, ist der zwischen den positiven Elektrodenplatten 6 und den Stegen 10 belassene Freiraum dafür vorgesehen, eine Vergrößerung der positiven Elektrodenplatten 6 infolge eines Wachstums aufnehmen zu können. Bei hinreichend langer Betriebsdauer des Akkumulators 1 kann es aber in nachteiliger Weise dazu kommen, dass der zwischen der Unterkante der Elektrodenplatten 6 und den Stegen 10 belassene Freiraum nicht ausreicht, um die Vergrößerung der positiven Elektrodenplatten 6 infolge des Wachstums kompensieren zu können. Es kann dann in nachteiliger Weise dazu kommen, dass sich die Elektrodenplatten 6 mit Erreichen der Stege 10 an denselben abstützen, wodurch sie nach oben gedrückt werden. Um gleichwohl sicherzustellen, dass es infolge eines solchen Nachobendrückens der positiven Elektrodenplatten nicht dazu kommt, dass sich Elektrolytundichtigkeiten zwischen Anschlusspol 15 und zugehöriger Durchtrittsöffnung 16 einstellen, wird eine Poldurchführung vorgeschlagen, die bei gleichzeitig sicherer Abdichtung zwischen Anschlusspol 15 und Deckel 5 eine Längsverschiebung des Anschlusspols 15 in Relation zur Durchtrittsöffnung 16 und damit in Relation zum Deckel 5 gewährleistet. Für die Anschlusspole 14 ist vorzugsweise eine Poldurchführung in gleicher Weise vorgesehen.

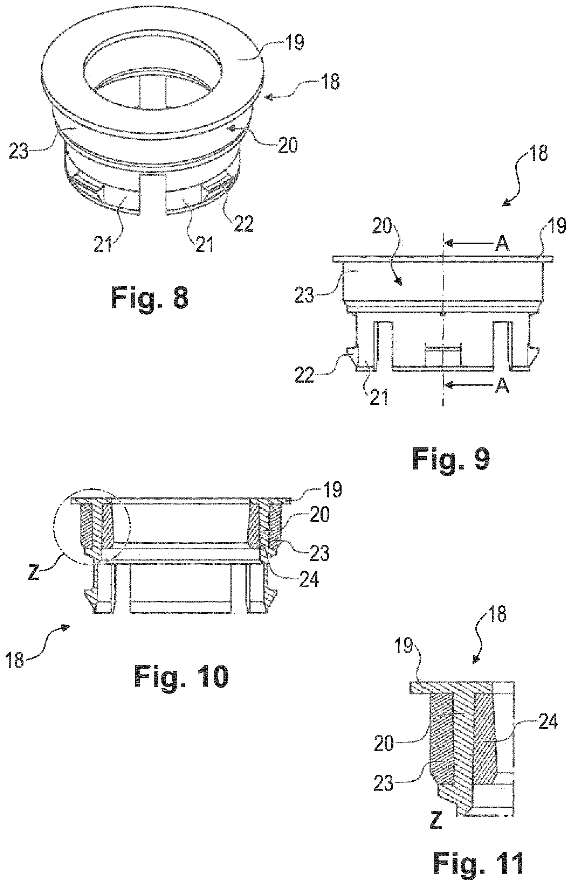

Die Poldurchführung verfügt über einen Ringkörper 18, wie er in den Figuren 8 bis 11 im Detail dargestellt ist.

Der Ringkörper 18 stellt ein Hülsenelement 20 bereit. Diese ist oberseitig mit einem Ringteil 19 ausgerüstet und trägt unterseitig mit Rasthaken 22 ausgerüstete Rastlaschen 21, wie sich insbesondere aus einer Zusammenschau der Figuren 8 und 9 ergibt.

Der Ringkörper 18 ist ferner mit einem Dichtsystem ausgestattet, das über zwei Dichtungen verfügt, nämlich über eine erste Dichtung 23 und eine zweite Dichtung 24. Im endmontierten Zustand ist die erste Dichtung 23 zwischen Ringkörper 18 und Deckel 5 angeordnet, wohingegen die zweite Dichtung 24 zwischen Ringkörper 18 und Anschlusspol 15 abdichtet. Die einzelnen Dichtungen 23 beziehungsweise 24 sind dabei als umlaufende Streifen ausgebildet, die am Hülsenelement 20 des Ringkörpers 18 anliegen, wie insbesondere eine Zusammenschau der Figuren 10 und 11 erkennen lässt.

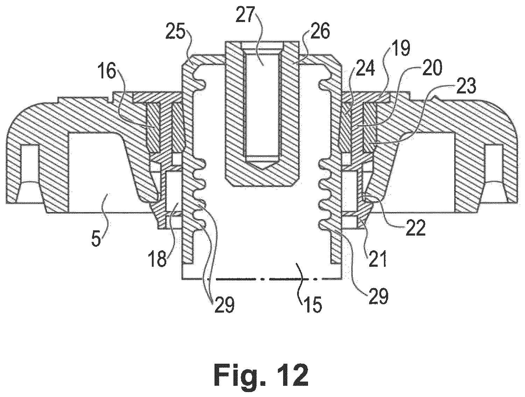

Im endmontierten Zustand ist der Ringkörper 18 in die zugehörige Durchtrittsöffnung 16 formschlüssig eingebracht, wie dies die Figuren 7 und 12 erkennen lassen. Dabei liegt der Ringkörper 18 mit seinem Ringteil 19 oberseitig am Deckel 5 an und die von den Rastlaschen 21 bereitgestellten Rasthaken 22 hintergreifen den Deckel 5 unterseitig, welcher Sachzusammenhang sich insbesondere aus der Detaildarstellung nach Figur 12 ergibt.

Im endmontierten Zustand durchragt der Anschlusspol 15 den Ringkörper 18, womit der Anschlusspol 15 auch die Durchtrittsöffnung 16 durchragt, und zwar unter Zwischenordnung des Ringkörpers 18. Auch dieser Sachzusammenhang ergibt sich insbesondere aus der Darstellung nach Figur 12.

Wie die Darstellung nach Figur 9 ferner erkennen lässt, liegen im endmontierten Zustand die Dichtung 23 zwischen Ringkörper 18 und Deckel 5 und die Dichtung 24 zwischen Ringkörper 18 und Anschlusspol 15 an. Hierdurch ist bei gleichzeitiger Verschieblichkeit des Anschlusspols 15 in Höhenrichtung 17 nach oben eine Abdichtung des Anschlusspols 15 gegenüber dem Deckel 5 sichergestellt.

Gemäß einer besonders bevorzugten Ausführungsform ist der Anschlusspol 15 mit einer Ummantelung ausgerüstet, die eine Kappe 25 bildet. Diese Kappe 25 liegt im endmontierten Zustand an der vom Ringkörper 18 bereitgestellten Dichtung 24 an, wodurch sich eine noch weiter verbesserte Abdichtung ergibt. Die die Kappe 25 bildende Kunststoffummantelung ist vorzugsweise an den Anschlusspol 15 angespritzt.

Zwecks einer elektrischen Kontaktierung des Anschlusspols 15 ist eine stirnseitig des Anschlusspols 15 zugängliche Gewindebohrung 27 vorgesehen. Diese wird vorzugsweise von einer in den Anschlusspol 15 eingelassenen Einlage 26 bereitgestellt, die zwecks Reduzierung des Innenwiderstandes aus Kupfer gebildet ist. Für einen Zugriff auf die Gewindebohrung 27 von außen ist die Kappe 25 mit einer entsprechenden Durchtrittsöffnung 28 ausgerüstet.

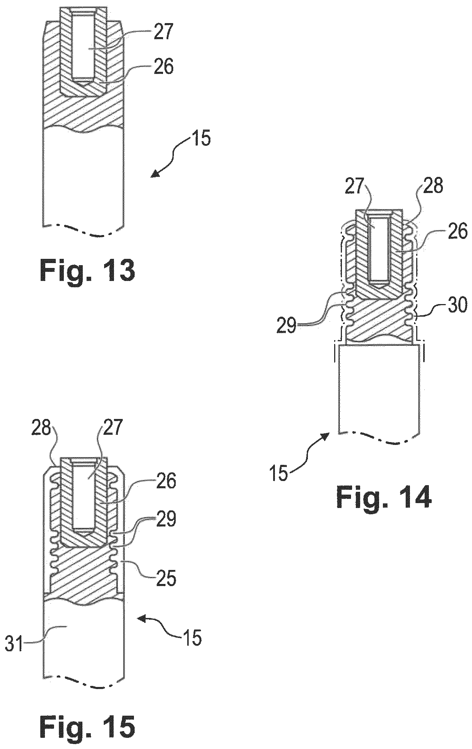

Wie sich insbesondre aus den beiden Figuren 12 und 15 ergibt, ist der Anschlusspol 15 mit einer Kappe 25 gemäß der vorbeschriebenen Ausgestaltung ausgerüstet. Dabei weist der Anschlusspol 15 einen Fußabschnitt 31 auf, der in radialer Richtung mit der Kappe 25 absatzfrei abschließt. Die vom Anschlusspol 15 insgesamt bereitgestellte Außenoberfläche geht also absatzfrei ineinander von Fußabschnitt 31 zum Kopfabschnitt über.

Um eine noch bessere Abdichtung gegenüber ungewollten Elektrolytleckagen zu erreichen, ist der Anschlusspol 15 im Bereich der Kappe 25 mit einer Labyrinthführung ausgerüstet. Diese Labyrinthführung ist durch eine Mehrzahl von Rillen 29 gebildet, die in Höhenrichtung 17 übereinander angeordnet sind, wie dies insbesondere die Figuren 12, 14 und 15 erkennen lassen.

Zur Ausgestaltung eines erfindungsgemäßen Anschlusspols 15 wird dieser zunächst aus Blei oder einer Bleilegierung, z.B. Hartblei, gegossen und stirnseitig mit einer Einlage 26 ausgerüstet, wie in Figur 13 dargestellt. Anschließend wird in einem zweiten Arbeitsschritt der Kopfbereich des Anschlusspols 15 spanend durch Drehen bearbeitet, infolgedessen der Anschlusspol 15 im Durchmesser reduziert wird, und zwar im Kopfbereich, und dies unter gleichzeitiger Ausbildung der Rillen 29. Alsdann erfolgt eine Oberflächenbeschichtung des Kopfbereich 90 mit einem Haftvermittler 30.

In einem dritten Arbeitsschritt wird die Kappe 25 ausgebildet, indem der Kopfbereich des Anschlusspols 15 mit einer Kunststoffummantelung umspritzt wird. Diese Kunststoffummantelung greift in die Rillen 29 ein, wodurch eine innige Verbindung mit dem Bleimaterial des Anschlusspols 15 gewährleistet ist. Ferner ist durch die Rillenausgestaltung der Vorteil erreicht, dass der Kriechweg für die zur Kriechbewegung neigende Schwefelsäure verlängert ist, womit etwaige Leckagen auf ein Minimum reduziert sind.

Der so ausgebildete Anschlusspol 15, wie er in Fig. 15 gezeigt ist, ist im Sinne der Erfindung endfertig vorbereitet. Es kann alsdann im Weiteren in schon vorbeschriebener Weise die Polbrücke durch Gießen ausgebildet werden, wobei die Anschlusspole 15 während des Gießens der Polbrücke in die Polbrücke eingebettet werden.

### Bezugszeichen

- 1: Akkumulator
- 2: Gehäuse
- 3: Grundkörper
- 4: offene Seite
- 5: Deckel
- 6: positive Elektrodenplatte
- 7: negative Elektrodenplatte
- 8: Separator
- 9: Gehäuseboden
- 10: Steg
- 11: Schutzgitter
- 12: negative Polbrücke
- 13: positive Polbrücke
- 14: negativer Anschlusspol
- 15: positiver Anschlusspol
- 16: Durchtrittsöffnung
- 17: Höhenrichtung
- 18: Ringkörper
- 19: Ringteil
- 20: Hülsenelement
- 21: Rastlasche
- 22: Rasthaken
- 23: erste Dichtung
- 24: zweite Dichtung
- 25: Kappe
- 26: Einlage
- 27: Gewindebohrung
- 28: Öffnung
- 29: Rille
- 30: Beschichtung
- 31: Fußabschnitt
- 32: Abstandshalter
- 33: Arm
- 34: Fahne
- 35: Fahne
- 36: Längserstreckung
- 37: Verjüngung
- 38: Sockelbereich
- 39: Elektrodenplattenpaket

## Patentansprüche

1. Verfahren zur Ausbildung eines Elektrodenplattenpakets für einen Bleiakkumulator, insbesondere einen sogenannten GroE-Akkumulator, aufweisend folgende Schritte:
- Bereitstellen von positiven und negativen Elektrodenplatten (6, 7) sowie von Separatoren (8),
- abwechselndes Anordnen von negativen und positiven Elektrodenplatten (6, 7) unter jeweiliger Zwischenordnung eines Separators (8),
- Bereitstellen eines endfertig ausgebildeten, ersten Anschlusspols (14) für die negativen Elektrodenplatten (7) und eines endfertig ausgebildeten, zweiten Anschlusspols (15) für die positiven Elektrodenplatten (6),
- Gießen einer ersten Polbrücke (12) für die negativen Elektrodenplatten (7) und einer zweiten Polbrücke (13) für die positiven Elektrodenplatten (6),
- wobei der erste Anschlusspol (14) während des Gießens der ersten Polbrücke (12) in die erste Polbrücke (12) eingebettet wird und wobei der zweite Anschlusspol (15) während des Gießens der zweiten Polbrücke (13) in die zweite Polbrücke (13) eingebettet wird und
- elektrisches Verbinden der negativen Elektrodenplatten (7) und der mit dem ersten Anschlusspol (14) ausgerüsteten ersten Polbrücke (12) einerseits sowie der positiven Elektrodenplatten (6) und der mit dem zweiten Anschlusspol (15) ausgerüsteten zweiten Polbrücke (13).

2. Verfahren nach Anspruch 1, **dadurch gekennzeichnet, dass** die Elektrodenplatten (6, 7) zur elektrischen Verbindung mit der jeweiligen Polbrücke (12, 13) mit einer Kontaktfahne (34, 35) ausgerüstet werden.

3. Verfahren nach Anspruch 2, **dadurch gekennzeichnet, dass** die Kontaktfahnen (34, 35) während des Gießens der jeweiligen Polbrücke (12, 13) in die Polbrücke (12, 13) eingebettet werden.

4. Verfahren nach Anspruch 2, **dadurch gekennzeichnet, dass** die Kontaktfahnen (34, 35) mit der jeweiligen Polbrücke (12, 13) verlötet werden.

5. Verfahren nach einem der vorhergehenden Ansprüche, **dadurch gekennzeichnet, dass** der in Wirkverbindung mit den positiven Elektrodenplatten (6) stehende Anschlusspol (15) aus einer Bleilegierung, vorzugsweise Hartblei, gegossen wird.

6. Verfahren nach einem der vorhergehenden Ansprüche, **dadurch gekennzeichnet, dass** die in Wirkverbindung mit den positiven Elektrodenplatten (6) stehende Polbrücke (13) aus Reinblei gegossen wird.

7. Verfahren nach einem der vorhergehenden Ansprüche, **dadurch gekennzeichnet, dass** ein Anschlusspol (14, 15) mit einer Kappe (25) aus Kunststoff ausgerüstet wird.

8. Verfahren nach Anspruch 7, **dadurch gekennzeichnet, dass** eine Kappe (25) durch Anspritzen ausgebildet wird.

9. Verfahren nach einem der vorhergehenden Ansprüche, **dadurch gekennzeichnet, dass** ein Anschlusspol (14, 15) außenumfangsseitig mit einer Rille (29) ausgerüstet wird.

10. Verfahren nach einem der vorhergehenden Ansprüche, **dadurch gekennzeichnet, dass** eine Polbrücke (12, 13) mit Querschnittsverjüngungen (37) ausgebildet wird.

11. Verfahren nach einem der vorhergehenden Ansprüche, **dadurch gekennzeichnet, dass** ein Anschlusspol (14, 15) mit einer stirnseitig zugänglichen Einlage (26) aus Kupfer oder einer Kupferlegierung ausgebildet wird.

12. Verfahren nach einem der vorhergehenden Ansprüche, **dadurch gekennzeichnet, dass** ein Ausbilden des Elektrodenplattenpakets (39) in einem Akkumulatorgehäuse (2) durchgeführt wird.

13. Bleiakkumulator, insbesondere GroE-Akkumulator, mit einem Gehäuse (2) und einer Mehrzahl von im Gehäuse (2) angeordneten Elektrodenplatten (6, 7), wobei positive und negative Elektrodenplatten (6, 7) vorgesehen sind, die sich unter jeweiliger Zwischenordnung eines Separators (8) einander abwechseln, wobei das Gehäuse (2) einen einseitig offen ausgebildeten Grundkörper (3) und einen die offene Seite (4) des Grundkörpers (3) verschließenden Deckel (5) aufweist, wobei die positiven Elektrodenplatten (6) einerseits und die negativen Elektrodenplatten (7) andererseits jeweils mittels einer Polbrücke (12, 13) elektrisch miteinander verbunden sind, wobei jede Polbrücke (12, 13,) jeweils einen Anschlusspol (14, 15) trägt, **dadurch gekennzeichnet, dass** die Anschlusspole (14, 15) in die jeweils zugehörige Polbrücke (12, 13) stoffschlüssig eingebettet sind.

14. Bleiakkumulator nach Anspruch 13, **dadurch gekennzeichnet, dass** die Anschlusspole (14, 15) aus einer Bleilegierung und die Polbrücken (12, 13) aus Reinblei gebildet sind, wobei die Anschlusspole (14, 15) unter Ausbildung der jeweils zugehörigen Polbrücke (12, 13) von Reinblei umgossen sind.

15. Bleiakkumulator nach Anspruch 13 oder 14, **dadurch gekennzeichnet, dass** die Anschlusspole (14, 15) durch eine jeweilige Durchtrittsöffnung (16) im Deckel (5) hindurchragen, wobei der Anschlusspol (15) der positiven Elektrodenplatten (6) in Relation zum Deckel (5) längsverschieblich von der zugehörigen Durchtrittsöffnung (16) aufgenommen ist.

## Geänderte Patentansprüche

### Geänderte Patentansprüche gemäss Regel 137(2) EPÜ.

1. Verfahren zur Ausbildung eines Elektrodenplattenpakets für einen Bleiakkumulator, insbesondere einen sogenannten Großoberflächenplatten Engeinbau (GroE)-Akkumulator, aufweisend folgende Schritte:
- Bereitstellen von positiven und negativen Elektrodenplatten (6, 7) sowie von Separatoren (8),
- abwechselndes Anordnen von negativen und positiven Elektrodenplatten (6, 7) unter jeweiliger Zwischenordnung eines Separators (8),
- Bereitstellen eines endfertig ausgebildeten, ersten Anschlusspols (14) für die negativen Elektrodenplatten (7) und eines endfertig ausgebildeten, zweiten Anschlusspols (15) für die positiven Elektrodenplatten (6),
- Gießen einer ersten Polbrücke (12) für die negativen Elektrodenplatten (7) und einer zweiten Polbrücke (13) für die positiven Elektrodenplatten (6),
- wobei der erste Anschlusspol (14) während des Gießens der ersten Polbrücke (12) in die erste Polbrücke (12) stoffschlüssig eingebettet wird und wobei der zweite Anschlusspol (15) während des Gießens der zweiten Polbrücke (13) in die zweite Polbrücke (13) stoffschlüssig eingebettet wird und
- elektrisches Verbinden der negativen Elektrodenplatten (7) und der mit dem ersten Anschlusspol (14) ausgerüsteten ersten Polbrücke (12) einerseits sowie der positiven Elektrodenplatten (6) und der mit dem zweiten Anschlusspol (15) ausgerüsteten zweiten Polbrücke (13).

2. Verfahren nach Anspruch 1, **dadurch gekennzeichnet, dass** die Elektrodenplatten (6, 7) zur elektrischen Verbindung mit der jeweiligen Polbrücke (12, 13) mit einer Kontaktfahne (34, 35) ausgerüstet werden.

3. Verfahren nach Anspruch 2, **dadurch gekennzeichnet, dass** die Kontaktfahnen (34, 35) während des Gießens der jeweiligen Polbrücke (12, 13) in die Polbrücke (12, 13) eingebettet werden.

4. Verfahren nach Anspruch 2, **dadurch gekennzeichnet, dass** die Kontaktfahnen (34, 35) mit der jeweiligen Polbrücke (12, 13) verlötet werden.

5. Verfahren nach einem der vorhergehenden Ansprüche, **dadurch gekennzeichnet, dass** der in Wirkverbindung mit den positiven Elektrodenplatten (6) stehende Anschlusspol (15) aus einer Bleilegierung, vorzugsweise Hartblei, gegossen wird.

6. Verfahren nach einem der vorhergehenden Ansprüche, **dadurch gekennzeichnet, dass** die in Wirkverbindung mit den positiven Elektrodenplatten (6) stehende Polbrücke (13) aus Reinblei gegossen wird.

7. Verfahren nach einem der vorhergehenden Ansprüche, **dadurch gekennzeichnet, dass** ein Anschlusspol (14, 15) mit einer Kappe (25) aus Kunststoff ausgerüstet wird.

8. Verfahren nach Anspruch 7, **dadurch gekennzeichnet, dass** eine Kappe (25) durch Anspritzen ausgebildet wird.

9. Verfahren nach einem der vorhergehenden Ansprüche, **dadurch gekennzeichnet, dass** ein Anschlusspol (14, 15) außenumfangsseitig mit einer Rille (29) ausgerüstet wird.

10. Verfahren nach einem der vorhergehenden Ansprüche, **dadurch gekennzeichnet, dass** eine Polbrücke (12, 13) mit Querschnittsverjüngungen (37) ausgebildet wird.

11. Verfahren nach einem der vorhergehenden Ansprüche, **dadurch gekennzeichnet, dass** ein Anschlusspol (14, 15) mit einer stirnseitig zugänglichen Einlage (26) aus Kupfer oder einer Kupferlegierung ausgebildet wird.

12. Verfahren nach einem der vorhergehenden Ansprüche, **dadurch gekennzeichnet, dass** ein Ausbilden des Elektrodenplattenpakets (39) in einem Akkumulatorgehäuse (2) durchgeführt wird.

13. Bleiakkumulator, insbesondere GroE-Akkumulator, mit einem Gehäuse (2) und einer Mehrzahl von im Gehäuse (2) angeordneten Elektrodenplatten (6, 7), wobei positive und negative Elektrodenplatten (6, 7) vorgesehen sind, die sich unter jeweiliger Zwischenordnung eines Separators (8) einander abwechseln, wobei das Gehäuse (2) einen einseitig offen ausgebildeten Grundkörper (3) und einen die offene Seite (4) des Grundkörpers (3) verschließenden Deckel (5) aufweist, wobei die positiven Elektrodenplatten (6) einerseits und die negativen Elektrodenplatten (7) andererseits jeweils mittels einer Polbrücke (12, 13) elektrisch miteinander verbunden sind, wobei jede Polbrücke (12, 13,) jeweils einen Anschlusspol (14, 15) trägt, wobei die Anschlusspole (14, 15) in die jeweils zugehörige Polbrücke (12, 13) stoffschlüssig eingebettet sind, wobei die Anschlusspole (14, 15) durch eine jeweilige Durchtrittsöffnung (16) im Deckel (5) hindurchragen, wobei ein Dichtsystem vorgesehen ist, das über zwei Dichtungen (23, 24) verfügt, eine deckelseitige erste Dichtung (23) einerseits und eine anschlusspolseitige zweite Dichtung (24) andererseits und wobei beide Dichtungen (23, 24) von einem Ringkörper (18) bereitgestellt sind, der den jeweiligen Anschlusspol (14, 15) umgreift.

14. Bleiakkumulator nach Anspruch 13, **dadurch gekennzeichnet, dass** die Anschlusspole (14, 15) aus einer Bleilegierung und die Polbrücken (12, 13) aus Reinblei gebildet sind, wobei die Anschlusspole (14, 15) unter Ausbildung der jeweils zugehörigen Polbrücke (12, 13) von Reinblei umgossen sind.
